(19) Europäisches Patentamt

European Patent Office

Office européen des brevets

(11) Veröffentlichungsnummer: **0 499 323 A2**

# (12) EUROPÄISCHE PATENTANMELDUNG

(21) Anmeldenummer: **92200348.8**

(22) Anmeldetag: **04.02.92**

(51) Int. Cl.5: **G11B 7/085**

(30) Priorität: **09.02.91 DE 4103975**

(43) Veröffentlichungstag der Anmeldung:
**19.08.92 Patentblatt 92/34**

(84) Benannte Vertragsstaaten:
PT

(71) Anmelder: **Deutsche Thomson-Brandt GmbH**
**Hermann-Schwer-Strasse 3 Postfach 1307**
**W-7730 Villingen-Schwenningen(DE)**

(72) Erfinder: **Baas, Dieter**
**Sofienstrasse 10**
**W-7640 Kehl-Auenheim(DE)**

(54) **Verfahren zur Verkürzung der Zugriffszeit.**

(57) 2.1 Beim Spurspringen, wenn die Abtastvorrichtung eines Wiedergabegerätes schnell über viele Datenspuren einer Platte fährt, kann nur auf eine Spur genau gesprungen werden. Bis aber der Zielpunkt auf der Zielspur vom Lichtstrahl der Abtastvorrichtung erfaßt wird, muß im schlimmsten Fall eine Umdrehung der Platte (CD) abgewartet werden. Bei einem CDSpieler, einem CLV-System, beträgt diese zusätzliche Wartezeit 120 ms bis 330 ms.

2.2 Um die Zugriffszeit zu verkürzen, wird aus der Anzahl A der zwischen der zuletzt abgetasteten Datenspur (S1) und der Zielspur (S2) liegenden Spuren, aus den Winkellagen des zuletzt abgetasteten Punktes (P1) auf der zuletzt abgetasteten Datenspur (S1) und des Zielpunktes (P2) auf der Zielspur (S2) sowie aus der Dauer der Sprungzeit diejenige Drehzahl der Platte berechnet, die erforderlich ist, damit bei Erreichen der Zielspur (S2) der Zielpunkt (P2) erfaßt wird.

2.3 Wiedergabegeräte- und/oder Aufzeichnungsgeräte, die eine rotierende Platte berührungslos abtasten, z.B. CD-Spieler, Videoplattenspieler, DRAWDisc-Spieler oder magneto-optische Geräte.

FIG.

Die Erfindung betrifft ein Verfahren zur Verkürzung der Zugriffszeit auf einen bestimmten Zielpunkt einer Datenspur einer in einem Aufzeichnungs- und/oder Wiedergabegerät rotierenden Platte.

In einem CD-Spieler tastet eine optische Abtastvorrichtung mittels eines Lichtstrahls die Daten eines rotierenden plattenförmigen Aufzeichnungsträgers, der sogenannten Compact-Disc, ab. Mittels eines Spurregelkreises wird der die Daten abtastende Lichtstrahl entlang der spiralförmigen Datenspuren der Platte geführt.

Damit der CD-Hörer ein von ihm gewünschtes Musikstück hören kann, wird die optische Abtastvorrichtung von der gegenwärtigen Position möglichst schnell zu der Datenspur geführt, auf der das gewünschte Musikstück beginnt. Der Lichtstrahl kreuzt während dieses Vorgangs, der als Spurspringen bezeichnet wird, eine Vielzahl von Datenspuren; er springt von der gerade abgetasteten Spur zur Zielspur. Je schneller das Spurspringen erfolgt, desto kürzer wird die Zugriffszeit, die Zeit, die der Bediener warten muß, bis er das gewünschte Musikstück hören kann.

Weil aber nur auf eine Spur genau, nicht jedoch auch auf den Zielpunkt der Zielspur gesprungen werden kann, muß im ungünstigsten Fall eine Umdrehung der Platte abgewartet werden, ehe mit dem Lesen der Daten begonnen werden kann. Diese Wartezeit wirkt sich bei einem System, das die Daten mit konstanter Bahngeschwindigkeit abtastet - nach dem englischen Ausdruck Constant Linear Velocity häufig mit CLV-System abgekürzt - besonders nachteilig aus. Je nach dem, ob der Lichtstrahl zur innersten oder äußersten Datenspur der Platte gesprungen ist, schwankt die Wartezeit zwischen 120 ms und 330 ms, die zur Sprungzeit - das ist die Zeit, die der Lichtstrahl benötigt, um von der augenblicklichen Position zur Zielspur zu springen - hinzuzurechnen ist. Die Zugriffszeit auf einen bestimmten Zielpunkt auf einer Datenspur ist daher um 120 ms bis 330 ms erhöht.

Es ist deshalb Aufgabe der Erfindung, ein Verfahren anzugeben, das eine Verkürzung der Zugriffszeit erzielt.

Die Erfindung löst diese Aufgabe dadurch, daß die Anzahl der zwischen der abgetasteten Datenspur und der Zielspur liegenden Datenspuren berechnet wird, daß die Winkellage des zuletzt abgetasteten Punktes auf der zuletzt abgetasteten Datenspur und die Winkellage des Zielpunktes auf der Zielspur berechnet werden, daß die Sprungzeit T bis zum Erreichen des Zielpunktes auf der Zielspur berechnet wird, daß aus der Anzahl A der Datenspuren, der Winkellagen der beiden Punkte und der Sprungzeit diejenige Drehzahl der Platte berechnet wird, die erforderlich ist, damit bei Erreichen der Zielspur der Zielpunkt oder ein Punkt innerhalb eines vorgebbaren Abstandes vor dem Zielpunkt erfaßt wird.

Die Erfindung geht von der Erkenntnis aus, daß die Drehzahl der Platte so gewählt werden kann, daß bei Erreichen der Zielspur der Zielpunkt oder ein Punkt innerhalb eines vorgebbaren Abstandes vor dem Zielpunkt erfaßt wird. Weiter geht die Erfindung von der Erkenntnis aus, daß diese Drehzahl sieh aus der Anzahl A der zwischen der zuletzt abgetasteten Datenspur und der Zielspur liegenden Datenspuren, aus der Winkellage des zuletzt abgetasteten Punktes und der Winkellage des Zielpunktes auf der Platte sowie aus der Dauer T des Sprungs berechnen läßt. Die Dauer des Sprungs kann aus der Anzahl A der zu überspringenden Spuren berechnet werden.

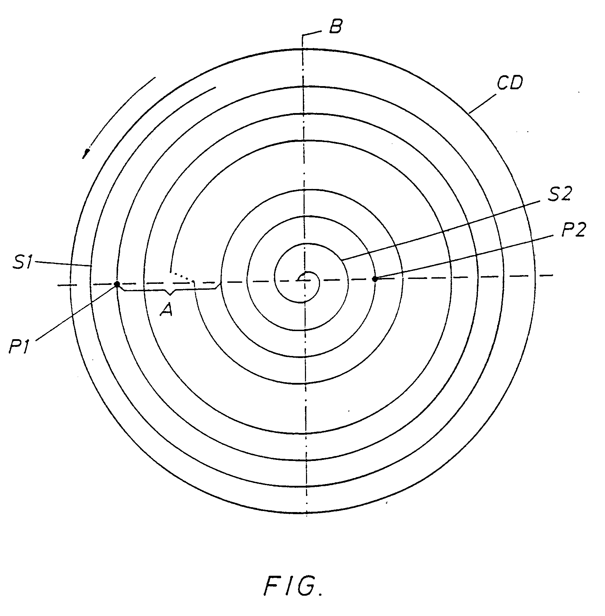

Anhand eines einfachen Zahlenbeispiels und mit Hilfe der Figur wird die Erfindung zuerst bei einem sogenannten CAV-System, der Abkürzung für Constant Angular Velocity, und anschließend bei einem sogenannten CLV-System, der Abkürzung für Constant Linear Velocity, erläutert.

In der Figur ist eine Platte CD gezeigt, auf der spiralförmige Datenspuren von innen nach außen verlaufen. Die Platte dreht sieh in Pfeilrichtung. Zwischen der zuletzt abgetasteten Datenspur S1 und der Zielspur S2 mögen z.B. 500 Spuren liegen. Der zuletzt abgetastete Punkt P1 auf der zuletzt abgetasteten Datenspur S1 liegt auf einem Radius, der in Drehrichtung der Platte gesehen einen Winkel von +90° mit dem als Bezugsachse eingezeichneten senkrechten Durchmesser B einschließt. Der Zielpunkt P2 auf der Zielspur S2 liegt auf einem Radius, der einen Winkel von +180° zur Bezugsachse B einschließt. Die Dauer für den Sprung vom Punkt P1 zum Zielpunkt P2 möge z.B. T betragen.

Damit bei Erreichen der Zielspur S2 der Zielpunkt P2 erfaßt wird, muß sieh die Platte während der Sprungzeit T um 1/2 oder um n + 1/2 Umdrehungen drehen. Es gibt unendliche viele Lösungen, weil n eine ganze Zahl ist.

Die Erfindung wird nun am Beispiel eines CAV-Systems erläutert.

Die Platte möge sich z.B. mit 300 Umdrehungen in der Minute drehen. Die Sprungzeit T möge beispielsweise eine halbe Sekunde betragen. In einer halben Sekunde macht die Platte 300/60x2 = 2 1/2 Umdrehungen. Wenn die Drehzahl von 300 Umdrehungen in der Minute beibehalten wird, trifft der die Platte abtastende Lichtstrahl bei Erreichen der Zielspur S2 genau auf den Zielpunkt P2.

Bei einem zweiten Zahlenbeispiel sei angenommen, daß die Sprungzeit T = 1 Sekunde beträgt. In einer Sekunde macht die Platte 300/60 = 5 Umdrehungen. Damit nun bei Erreichen der Zielspur S2 sofort der Zielpunkt P2 erfaßt wird, muß die Drehzahl der Platte so geändert werden, daß sie in der Sekunde z.B. 5 1/2 oder 4 1/2 Umdrehungen macht.

Wie bereits erwähnt sind mathematisch unendlich viele Lösungen möglich. Es ist daher sinnvoll, diejenigen Lösungen zu wählen, die am nächsten zur Ausgangsdrehzahl von 300 Umdrehungen in der Minute liegen. Das sind entweder 4 1/2 x 60 = 270 oder 5 1/2 x 60 = 330 Umdrehungen in der Minute. Wenn die Drehzahl der Platte daher zu Beginn des Sprungs auf 330 Umdrehungen in der Minute erhöht oder auf 270 Umdrehungen in der Minute erniedrigt wird, trifft der Lichtstrahl bei Erreichen der Zielspur S2 genau auf den Zielpunkt S2.

Wenn der Sprung von außen nach innen erfolgt, ist es bei einem CLV-System sinnvoll, die höhere der beiden berechneten Drehzahlen zu wählen, weil die Drehzahl der Platte beim Abtasten der Datenspuren von innen nach außen bei einem CLV-System abnimmt. Aus demselben Grund ist es bei Sprüngen von innen nach außen sinnvoll, die niedere der beiden Drehzahlen zu wählen.

Bei einem CLV-System ist es besonders vorteilhaft, zuerst die der Zielspur zugeordnete Drehzahl zu berechnen. Von allen möglichen Lösungen für die Drehzahl, die es ermöglichen, bei Erreicher der Zielspur S2 sofort den Zielpunkt P2 zu erfassen, wird diejenige Lösung ausgewählt, die der Drehzahl am nächsten kommt, die der Zielspur zugeordnet ist.

Diese Maßnahme hat die Vorteile, daß bei Erreichen der Zielspur nicht nur der Zielpunkt erfasst wird, sondern daß sich die Platte bereits annähernd mit der für die Zielspur vorgeschriebenen Drehzahl dreht.

Die Erfindung ist für Aufnahme- und/oder Wiedergabegeräte geeignet, die eine rotierende Platte berührungslos abtasten, wie z.B. CD-Spieler, Videoplattenspieler, DRAW-Disc-Spieler oder magneto-optisehe Geräte.

**Patentansprüche**

1. Verfahren zur Verkürzung der Zugriffszeit auf einen bestimmten Zielpunkt einer Datenspur einer in einem Aufzeichnungs- und/oder Wiedergabegerät rotierenden Platte (CD), **dadurch gekennzeichnet,** daß die Anzahl A der zwischen der zuletzt abgetasteten Datenspur (S1) und der Zielspur (S2) liegenden Datenspuren berechnet wird, daß die Winkellage des zuletzt abgetasteten Punktes (P1) auf der zuletzt abgetasteten Datenspur (S1) und die Winkellage des Zielpunktes (P2) auf der Zielspur (S2) berechnet werden, daß die Sprungzeit T bis zum Erreichen des Zielpunktes (P2) auf der Zielspur (S2) berechnet wird, daß aus der Anzahl A der Datenspuren, dar Winkellagen der beiden Punkte (P1, P2) und der Sprungzeit T diejenige Drehzahl der Platte (CD) berechnet wird, die erforderlich ist, damit bei Erreichen der Zielspur (S2) der Zielpunkt (P2) oder ein Punkt innerhalb eines vorgebbaren Abstandes vor dem Zielpunkt (P2) erfaßt wird.

2. Verfahren nach Anspruch 1, **dadurch gekennzeichnet,** daß von den unendlich vielen mathematisch möglichen Lösungen der Drehzahl diejenige Lösung gewählt wird, die der ursprünglichen Drehzahl der Platte am nächsten kommt.

3. Verfahren nach Anspruch 2, **dadurch gekennzeichnet,** daß bei einem CLV-System beim Springen von innen nach außen die niedere der beiden der ursprünglichen Drehzahl am nächsten liegenden Lösungen gewählt wird, während bei Sprüngen von außen nach innen die höhere der beiden der ursprünglichen Drehzahl am nächsten liegenden Lösungen gewählt wird.

4. Verfahren nach Anspruch 1, **dadurch gekennzeichnet,** daß bei einem CLV-System von den unendlich vielen Lösungen diejenige gewählt wird, die am nächsten zu der Drehzahl liegt, die für die Zielspur vorgeschrieben ist.

FIG.